# EUROPEAN PATENT SPECIFICATION

(11) **EP 2 114 289 B1**
(45) Date of publication and mention of the grant of the patent: **15.05.2013**
(21) Application number: 06842302.9
(22) Date of filing: 29.12.2006
(51) Int. Cl.: A61C 8/00

(54) **DENTAL TRANSFER FOR FIXING THE POSITION OF ENDOSSEOUS IMPLANTS IN DENTAL ARCHES**
DENTALTRANSFER ZUR FIXIERUNG DER POSITION VON ENOSSALEN IMPLANTATEN IN ZAHNBÖGEN
TRANSFERT D'EMPREINTE POUR LE RÉGLAGE DU POSITIONNEMENT D'IMPLANTS ENDO-OSSEUX DANS LES ARCADES DENTAIRES

(43) Date of publication of application: 11.11.2009
(73) Proprietor: Danza, Matteo, 65125 Pescara (IT)
(72) Inventor: DANZA, Matteo, I - 65125 Pescara (IT); ABEND EMSALEM, Patricia, F-69003 Lyon (FR); NITZAN, Bichacho, IL-64239 Tel Aviv (IL)
(74) Representative: Celestino, Marco
(86) International application number: PCT/IB2006/003799
(87) International publication number: WO 2008/081217

(56) References cited:
- EP-A- 0 727 193
- EP-A1- 0 593 926
- EP-A2- 0 808 609
- US-A1- 2003 104 336

## Description

### Field of the invention.

The present invention relates to a dental device and, in particular, it relates to a dental transfer for fixing the position of endosseous implants in dental arches.

### Description of the prior art.

During implant rehabilitative therapies, at the end of the recovery period and at start of osseointegration of the implants, for the construction of implant abutments and implant structures for supporting dental prosthesis, it is necessary to fix with extreme precision the perfect position, in the three dimensions, of the implants put in the dental arches. This procedure is presently carried out with a so called "pick-up" technique and provides a device called dental transfer.

This procedure consists of coupling the dental transfers to the implants located in the alveolar crests of the dental arches.

Normally a dental transfer provides a retention element with variable retaining shape that is adapted to remain embedded in an impression material put in a special impression tray. The perfect position of the implants depends on the dental technicians that assemble them on dental models.

The transfer, in particular, has an end with hexagonal shape complementary to the inner hexagon of the implant that is integral to the body of the same. The transfer is connected to the implant with a long screw.

More in detail, the screw crosses the transfer for all its length up to engaging with the inner thread of the implant, adapted to receive the fastening screw of the implant abutment. This way, the tightened screw causes a perfect matching of the transfer to the implant. The matching between transfer and implant prevents from a relative movement of the two coupled elements.

The opposite end of the screw is long enough to exceed several mm from the base of the transfer so that they can protrude from the hole made on the impression tray to allow unscrewing when the material is hardened.

The procedure for fixing the position of the implant consists of fixing the transfer to the implant and assigning the position of the transfer to the other structures of the dental arches, i.e. implant, alveolar environment, gums, teeth, etc.

The above described assignment is made through a perforated individual impression tray, specially built, which contains the impression material and incorporates and includes the transfer in the desired position, where it is located when it is coupled to the implants. When, in fact, the impression material changes its status from viscous to compact after polymerization, the screw that blocks the transfer to the implant is unscrewed and the impression tray that contains the hardened impression material is removed, with the transfer incorporated in a position complementary to the implant.

If inserted implants are not parallel to each other, the transfers are also not parallel to each other, since they reflect the orientation of the implants.

The hexagon of a transfer, coupled to the inner hexagon of the implant, which has a depth of 4,5 mm, will come out without friction only if the two systems are parallel to each other and if they share the disengagement trajectory. If the implants whose position is to be fixed are more than one, and are not perfectly parallel to each other, the hexagons of the transfer will come out from those of the implants, being subject necessarily to a deformation, owing to the elasticity of the impression material. The real position is then normally re-established by the elastic recovery of the material.

However, the elastic recovery, in particular, in case of disparallel condition, is not exact in a micrometric way. Therefore, the error is transferred unavoidably to the master model of the dental laboratory that is obtained by casting plaster around the analogs, which have been coupled to the transfer when the impression has been withdrawn by the mouth, and that are the replica of the implants whose position has to be fixed.

US2003/0104336 discloses a dental transfer provided with four components i.e. an upper outer sleeve a lower outer sleeve, an inner sleeve member and a screw adapted to engage with a dental implant. The external face of the upper outer sleeve is knurled, whereas the external face of the lower outer sleeve is essentially plain. This in order to ensure that the upper outer sleeve adheres to the impression material so that once the impression material is hardened enough, the impression tray is removed together with the upper outer sleeve embedded into it. On the contrary, the lower outer sleeve, which has an external face essentially plain, remains engaged with the implant, during the removal of the impression tray.Both EP0727193 and EP0808609 discloses a dental transfer comprising three components.

EP0593926 discloses a common dental transfer comprising two components.

### Summary of the invention

The invention is as claimed in claim 1. It is then a feature of the present invention to provide a dental transfer for fixing the position of endosseous implants in dental arches to avoid measurement errors in the position of the implants.

It is another feature of the invention to provide such a dental transfer capable of making easier the step of determining the position of the dental implants by an operator.

It is also a feature of the invention to provide such a dental transfer that has a low vertical encumbrance.

It is a particular feature of the invention to provide a dental transfer for fixing the position of the implants with high precision also in case of implants with a certain rate of disparallel condition.

It is a further feature of the invention to provide a dental transfer that allows an easy manual use by an operator.

This and other features are accomplished with one exemplary dental transfer, for transferring to an impression material in an impression support the position of a dental implant, said dental implant being already located in dental arches of a patient and having a housing, whose main feature is of providing:
- a tubular element having an end engageable in the housing in a rotationally blocked way, said tubular element having the other end protruding from the implant;
- a sleeve having an axial hole adapted to engage in a rotationally blocked way with the tubular element to approach to the implant, said tubular element being withdrawable from said sleeve when the latter is blocked in the hardened impression material in the impression support;
- a fastening screw adapted to cross the tubular element for all its length up to fit a screw threaded portion of the housing, said fastening screw forcing said sleeve in the correct position against said implant.

Advantageously, the portion of the tubular element penetrated by the sleeve has polygonal cross section, preferably hexagonal, which prevents it from a mutual rotation.

Preferably, the tubular element couples with the housing of the implant by means of surfaces with polygonal complementary cross section that prevents it from rotation.

The fastening screw has a enlarged head adapted to provide a handgrip for an operator.

Advantageously, the enlarged head of the fastening screw has a knurled portion that makes easier a grip to the operator. This allows screwing/unscrewing easily the fastening screw without the need of using a key, commonly used in dental transfers of prior art, which requires considerable vertical space for being operated.

In addition, or alternatively, to the knurled portion, the enlarged head of the fastening screw can be equipped at an end portion with a recess adapted to fit a common prosthetic jack of prior art, for example of the type having square cross section, for tightening and untightening it.

The tubular element, in use, has an end inserted in the implant and the other end protruding from the sleeve of a determined length adapted to engage with a ring-shaped recess made in the enlarged head of the fastening screw.

Preferably, the inner side face of the tubular element has a screw threaded portion complementary to the thread of the fastening screw.

In particular, when disassembling the dental device the fastening screw is unscrewed from the screw threaded housing, acting on the enlarged head, and is screwed in the tubular element at the screw threaded portion. This way, the tubular element can be easily extracted from the housing of the implant causing it to pass through the sleeve while it is steadily fixed to the hardened impression material. This way, it is avoided that the tubular element can accidentally fall in the mouth of the patient and the dentist can work in a maximum safety.

The sleeve has a frustum conical end adapted to engage with a bead, for example at an angle of 45°, made on the visible surface of the implant.

Advantageously, the sleeve has at least one circumferential recess, or groove, which has a retaining shape suitable to ensure a steady fastening in the hardened impression material.

In particular, the enlarged head of the fastening screw at the end portion has a recess adapted to fit a common prosthetic jack of prior art to provide the tightening or untightening of the screw.

### Brief description of the drawings.

The invention will be made clearer with the following description of an exemplary embodiment thereof, exemplifying but not limitative, with reference to the attached drawings wherein:
- Figure 1 shows an exploded perspective view of a dental transfer for fixing the position of endosseous implants in dental arches, according to the invention;
- Figure 2 shows a perspective elevation front view of the dental transfer of figure 1 in an assembled configuration;
- Figures from 3 to 8 show diagrammatically a perspective view of a possible succession of steps through which the registration of the position can be made of a dental implant with the dental transfer of figure 1;
- Figures from 9 to 11 show diagrammatically partially cross sectioned views of a possible succession of steps through which the dental transfer of figure 1 can be removed from the position registration configuration of the dental implant;

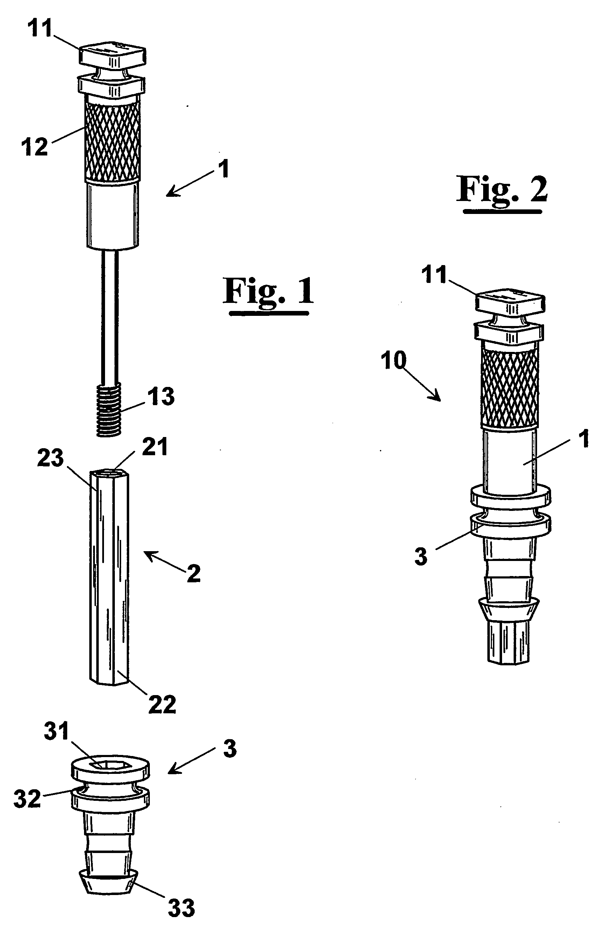

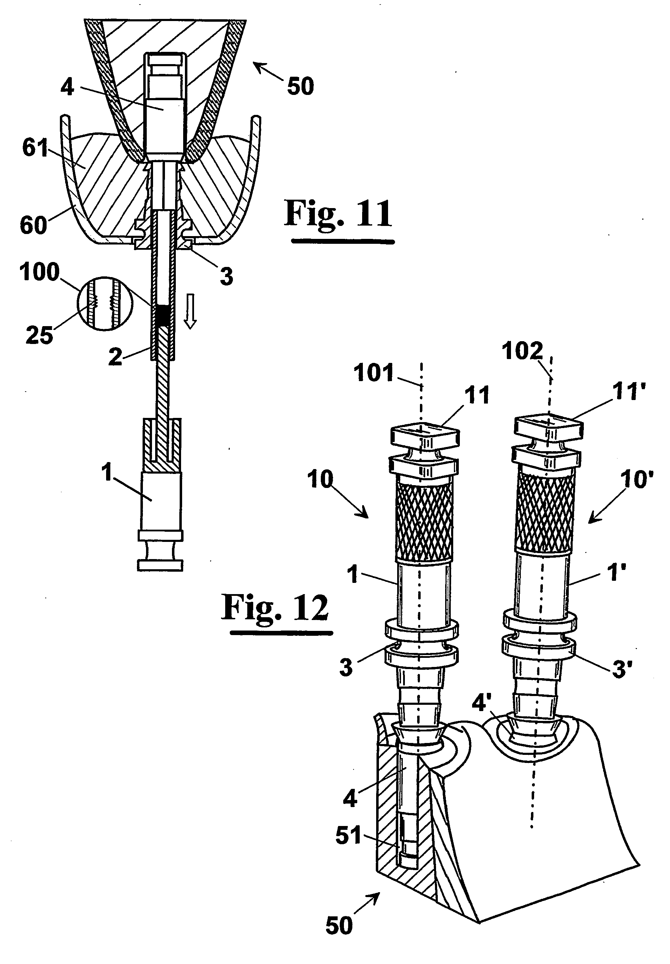

- Figure 12 shows finally a plurality of dental transfers of figure 1 used at the same time.

### Description of preferred exemplary embodiments.

In figures from 1 to 11 a dental transfer 10 is shown, according to the invention, for transferring to an impression material 61 the position and the orientation of at least one implant 4 located in the dental arch 50 of a patient.

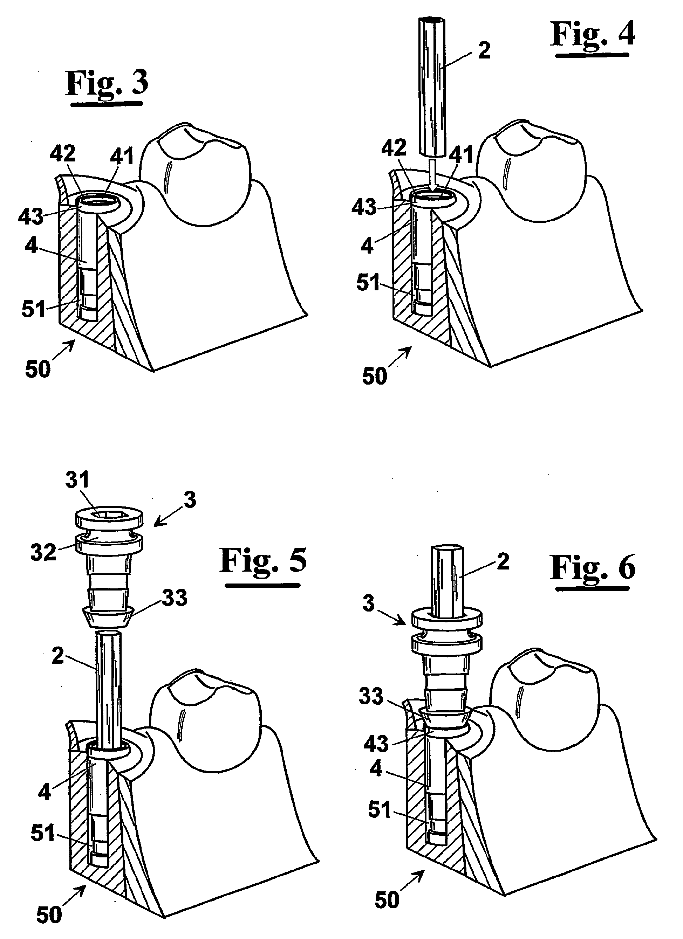

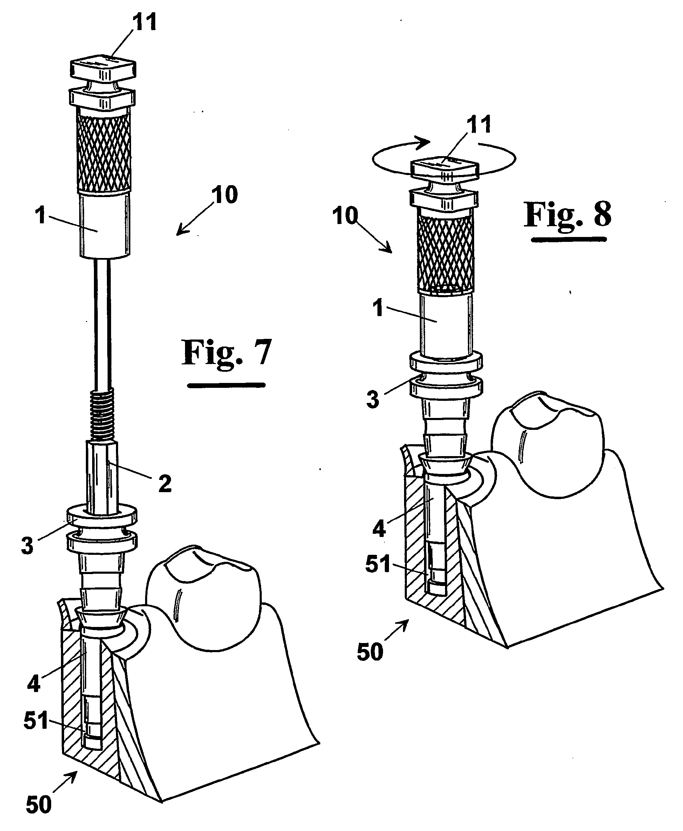

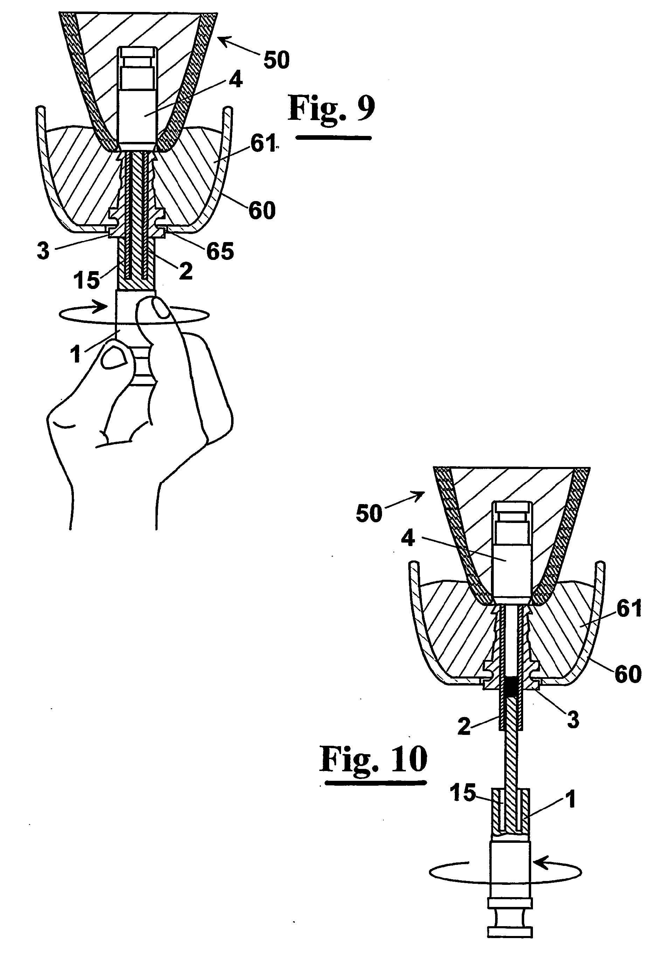

Dental transfer 10 provides, in detail, a tubular element, or cannula 2, which engages, at one end thereof 22, with a housing 41 made on the visible surface 42 of implant 4 (figure 4). Tubular element 2 and housing 41, having shape complementary to each other, have, in particular, surfaces with polygonal cross section, for example hexagonal, which block the rotation of tubular element 2. The latter has, in particular, hexagonal cross section for all its length.

At the other end 23 of tubular element 2, a sleeve 3 is mounted having an axial hole 31 which also has hexagonal cross section complementary to tubular element 2 (figure 5). Therefore, sleeve 3 can freely translate along tubular element 2, but cannot rotate with respect to it. This way, sleeve 3 translates along tubular element 2 up to the visible surface of implant 4.

Dental transfer 10 is completed by a fastening screw 1 equipped with a screw threaded end 13 and an enlarged head 11, knurled at a portion 12 for the grip of an operator.

Fastening screw 1 in use crosses tubular element 2 for all its length up to screwing at screw threaded end 13 in screw threaded housing 41 of implant 4, to it complementary. This way, sleeve 3 and tubular element 2 are locked in a correct working position at which the frustum conical end 33 of sleeve 3 engages in a conical bead 43 of implant 4.

In such an assembled configuration, the portion of tubular element 2 protruding from sleeve 3 is housed in a ring-shaped recess 15 made on a face 16 of enlarged head 11 oriented towards sleeve 3. This way, acting on fastening screw 1 the dentist can reach easily a precise matching between tubular element 2 and implant 4 and therefore an intimate and precise approach of sleeve 3 to implant 4.

The enlarged head 11 is caused to pass through an opening 65 of a common individual impression support 60 in which an impression material 61 is put capable of turning from a viscous status to a hardened status. To ensure a steady fastening in impression material 61, sleeve 3 comprises, in particular, a retaining shape comprising a circumferential recess, or groove 32, which gives a high capacity of being incorporated in impression material 61.

As shown in detail in the enlarged view 100 of figure 11, the inner side face of tubular element 2 has a screw threaded portion 25 complementary to that of end 13 of fastening screw 1. In particular, when disassembling the dental transfer 10, fastening screw 1 is unscrewed from screw threaded housing 41 and screwed into tubular element 2 at screw threaded portion 25. This way, tubular element 2 can be easily extracted from housing 41 and caused to pass through sleeve 3 whereas this is steadily fixed to impression material 61. This avoids that tubular element 2 can accidentally fall in the mouth of the patient during its removal and assists then the dentist to work at maximum safety.

Dental transfer 10, as above described, is particularly effective in case of more than one dental implant, for example two implants 4, 4' installed in a dental arch 50 of a patient and having a certain rate of disparallel condition (figure 12). In this case, in fact, the use of a dental transfer of prior art would cause unavoidably a certain rate of inaccurateness when fixing the position of the implant. In fact, when the hexagon of the transfer is disengaged from the housing of the implant, it is subject to deformation because of the elasticity of the impression material 61.

## Claims

1. Dental transfer (10) for transferring to an impression material (61) in an impression support (60) the position of a dental implant (4), said dental implant (4) being already located in a dental arch (50) of a patient and having a housing (41), said dental transfer providing:
- a tubular element (2) having an end (22) engageable in said housing (41) in a rotationally blocked way, said tubular element (2) having the other end (23) protruding from said implant (4);
- a sleeve (3) having an axial hole (31) adapted to engage in a rotationally blocked way with said tubular element (2) to approach said implant (4), said other end (23) of said tubular element (2), in use, protruding from said sleeve (3) of a determined length; said tubular element (2) being withdrawable from said sleeve (3) when the latter is blocked in the hardened impression material (61) in said impression support (60), wherein said sleeve (3) has a retaining shape suitable to ensure a steady fastening in the impression material (61);
- a fastening screw (1) adapted to cross the tubular element (2) for all its length up to fit a screw threaded portion of said housing (41), , said fastening screw (1) having an enlarged head (11) adapted to provide a handgrip for an operator; **characterised in that**
said sleeve (3) has a frustum conical end (33) adapted to engage in a bead (43) made on a visible surface of said implant (4);
and **in that**
said end other (23) of said tubular element (2) that protrudes from said sleeve (3) engages with a ring-shaped recess (15) made on a face of said enlarged head (11) oriented towards said sleeve (3) in such a way that said fastening screw (1) forces said sleeve (3) in a correct position against said implant (4) whereby a easy and precise matching between said tubular element (2) and said implant (4) and an intimate and precise approach of said sleeve (3) to said implant (4) can be reached.

2. Dental transfer, according to claim 1, wherein the portion of said tubular element (2) that penetrates said sleeve (3) has polygonal cross section, preferably hexagonal, which prevents them from a mutual rotation.

3. Dental transfer, according to claim 1, wherein said tubular element (2) has polygonal cross section for all its length.

4. Dental transfer, according to claim 1, wherein said tubular element (2) fits said housing (41) of said implant (4) by means of surfaces with polygonal complementary cross section that prevents it from rotation.

5. Dental transfer, according to claim 1, wherein said tubular element (2) at the inner side face has a screw threaded portion (25) complementary to the thread (13) of said fastening screw (1) in such a way that when said dental transfer (10) is disassembled, said fastening screw (1) is unscrewed from said screw threaded housing (41) and screwed into said tubular element (2) at said screw threaded portion (25) so that said tubular element (2) can be easily extracted from said housing (41) and caused to pass through sleeve (3) whereas this is steadily fixed to said impression material (61).

6. Dental transfer, according to claim 1, wherein said sleeve (3) has at least one circumferential recess, or groove (32) suitable to ensure a steady fastening in the hardened impression material (61).

7. Dental transfer, according to claim 1, wherein said enlarged head (11) of said fastening screw (1) has a knurled portion (12) that assists its grip.

8. Dental transfer, according to claim 1, wherein said enlarged head (11) of said fastening screw (1) at an end portion is equipped with a recess adapted to fit a common prosthetic jack of prior art for tightening and untightening said screw (1).

## Patentansprüche

1. Dentaltransfer (10) zum Übertragen der Position eines Dentalimplantats (4) auf ein Abdruckmaterial (61) in einem Abdruckträger (60), wobei das Dentalimplantat (4) bereits in einem Dentalbogen (50) eines Patienten angeordnet ist und ein Gehäuse (41) besitzt, wobei der Dentaltransfer vorsieht:
- ein rohrförmiges Element (2) mit einem Ende (22), das in dem Gehäuse (41) in einer drehgesicherten Weise in Eingriff bringbar ist, wobei das andere Ende (23) des rohrförmigen Elements (2) von dem Implantat (4) vorsteht,
- eine Hülse (3) mit einem axialen Loch (31), das eingerichtet ist, um in einer drehgesicherten Weise mit dem rohrförmigen Element (2) in Eingriff zu gelangen, um sich dem Implantat (4) anzunähern, wobei das andere Ende (23) des rohrförmigen Elements (2) im Einsatz von der Hülse (3) um eine vorbestimmte Länge vorsteht, wobei das rohrförmige Element (2) von der Hülse (3) zurückziehbar ist, wenn die letztere in dem ausgehärteten Abdruckmaterial (61) in dem Abdruckträger (60) blockiert ist, wobei die Hülse (3) eine Rückhalteform besitzt, die geeignet ist, um eine dauerhafte Befestigung in dem Abdruckmaterial (61) zu gewährleisten,
- eine Befestigungsschraube (1), die eingerichtet ist, um das rohrförmige Element (2) über seiner gesamten Länge zu durchsetzen, um in einen Schraubengewindeabschnitt des Gehäuses (41) zu passen, wobei die Befestigungsschraube (1) einen erweiterten Kopf (11) besitzt, der eingerichtet ist, um einen Handgriff für einen Operator vorzusehen,
**dadurch gekennzeichnet, dass**
die Hülse (3) ein kegelstumpfartiges konisches Ende (33) besitzt, das eingerichtet ist, um in einen Flansch (43) einzugreifen, der an einer sichtbaren Oberfläche des Implantats (4) ausgebildet ist,
und dadurch, dass
das andere Ende (23) des rohrförmigen Elements (2), das von der Hülse (3) vorsteht, mit einer ringförmigen Ausnehmung (15) in Eingriff gelangt, die an einer Fläche des erweiterten Kopfes (11), die zu der Hülse (3) hin orientiert ist, auf solche Weise ausgebildet ist, dass die Befestigungsschraube (1) die Hülse (3) in eine korrekte Position gegen das Implantat (4) zwingt, wodurch eine einfache und präzise Anpassung zwischen dem rohrförmigen Element (2) und dem Implantat (4) und eine enge und präzise Annäherung der Hülse (3) an das Implantat (4) erreicht werden kann.

2. Dentaltransfer gemäß Anspruch 1, wobei der Abschnitt des rohrförmigen Elements (2), der die Hülse (3) durchdringt, einen polygonalen Querschnitt besitzt, vorzugsweise einen hexagonalen, der sie an einer gegenseitigen Drehung hindert.

3. Dentaltransfer gemäß Anspruch 1, wobei das rohrförmige Element (2) einen polygonalen Querschnitt über seiner gesamten Länge besitzt.

4. Dentaltransfer gemäß Anspruch 1, wobei das rohrförmige Element (2) in das Gehäuse (41) des Implantats (4) mittels Oberflächen mit komplementärem polygonalem Querschnitt passt, welcher dieses an einer Drehung hindert.

5. Dentaltransfer gemäß Anspruch 1, wobei das rohrförmige Element (2) an der Innenseitenfläche einen Schraubengewindeabschnitt (25) besitzt, der zu dem Gewinde (13) der Befestigungsschraube (1) in solcher Weise komplementär ist, dass, wenn der Dentaltransfer (10) auseinander gebaut ist, die Befestigungsschraube (1) aus dem mit Schraubengewinde versehenen Gehäuse (41) herausgeschraubt und in das rohrförmige Element (2) an dem Schraubengewindeabschnitt (25) eingeschraubt ist, so dass das rohrförmige Element (2) einfach aus dem Gehäuse (41) herausgezogen werden und durch die Hülse (3) passieren kann, während diese dauerhaft an dem Abdruckmaterial (61) befestigt ist.

6. Dentaltransfer gemäß Anspruch 1, wobei die Hülse (3) mindestens eine Umfangsausnehmung oder Nut (32) aufweist, die geeignet ist, um eine dauerhafte Befestigung in dem ausgehärteten Abdruckmaterial (61) sicherzustellen.

7. Dentaltransfer gemäß Anspruch 1, wobei der erweiterte Kopf (11) der Befestigungsschraube (1) einen gerändelten Abschnitt (12) besitzt, der dessen Greifbarkeit unterstützt.

8. Dentaltransfer gemäß Anspruch 1, wobei der erweiterte Kopf (11) der Befestigungsschraube (1) an einem Endabschnitt mit einer Ausnehmung versehen ist, die eingerichtet ist, um zu einer allgemeinen prothetischen Hebevorrichtung aus dem Stand der Technik zum Befestigen und Lösen der Schraube (1) zu passen.

## Revendications

1. Transfert (10) dentaire destiné à transférer la position d'un implant (4) dentaire sur un matériau (61) d'empreinte dans un support (60) d'empreinte, ledit implant (4) dentaire étant déjà situé dans une arcade (50) dentaire d'un patient et présentant un logement (41), ledit transfert dentaire fournissant :
- un élément (2) tubulaire présentant une extrémité (22) se mettant en prise dans ledit logement (41) d'une manière rotationnellement bloquée, ledit élément (2) tubulaire ayant l'autre extrémité (23) en saillie par rapport audit implant (4) ;
- un manchon (3) présentant un orifice (31) axial conçu pour être mis en prise d'une manière rotationnellement bloquée avec ledit élément (2) tubulaire pour s'approcher dudit implant (4), ladite autre extrémité (23) dudit élément (2) tubulaire, en cours d'utilisation, étant en saillie par rapport audit manchon (3) d'une longueur déterminée ; ledit élément (2) tubulaire pouvant être enlevé dudit manchon (3) lorsque ce dernier est bloqué dans le matériau (61) d'empreinte durci dans ledit support (60) d'empreinte, dans lequel ledit manchon (3) a une forme de retenue appropriée pour assurer une fixation solide dans le matériau (61) d'empreinte ;
- une vis (1) de fixation conçue pour traverser l'élément (2) tubulaire sur toute sa longueur afin de s'adapter sur une partie filetée dudit logement (41), ladite une vis (1) de fixation présentant une tête (11) élargie conçue pour fournir un moyen de préhension à un opérateur ;
**caractérisé en ce que**
ledit manchon (3) présente une extrémité (33) tronconique conçue pour venir en prise dans un bourrelet (43) réalisé sur une surface visible dudit implant (4) ;
et **en ce que**
ladite autre extrémité (23) dudit élément (2) tubulaire qui fait saillie depuis ledit manchon (3) se met en prise avec un renfoncement (15) en forme d'anneau réalisé sur une face de ladite tête (11) élargie orientée vers ledit manchon (3) de sorte que ladite vis (1) de fixation force ledit manchon (3) dans une position correcte contre ledit implant (4), ce qui permet de faire correspondre facilement et avec précision ledit élément (2) tubulaire et ledit implant (4) et d'approcher étroitement et de manière précise ledit manchon (3) dudit implant (4).

2. Transfert dentaire, selon la revendication 1, dans lequel la partie dudit élément (2) tubulaire qui pénètre dans ledit manchon (3) a une section transversale polygonale, de préférence hexagonale, ce qui empêche ledit élément (2) tubulaire et ledit manchon (3) de tourner l'un par rapport à l'autre.

3. Transfert dentaire, selon la revendication 1, dans lequel ledit élément (2) tubulaire a une section transversale polygonale sur toute sa longueur.

4. Transfert dentaire, selon la revendication 1, dans lequel ledit élément (2) tubulaire s'adapte sur ledit logement (41) dudit implant (4) au moyen de surfaces ayant une section transversale polygonale complémentaire qui l'empêche de tourner.

5. Transfert dentaire, selon la revendication 1, dans lequel ledit élément (2) tubulaire au niveau de la face latérale interne présente une partie (25) filetée complémentaire du filet (13) de ladite vis (1) de fixation de telle sorte que lorsque ledit transfert (10) dentaire est démonté, ladite vis (1) de fixation est dévissée dudit logement (41) fileté et vissée dans ledit l'élément (2) tubulaire au niveau de ladite partie (25) filetée de façon à ce que ledit élément (2) tubulaire puisse être facilement extrait dudit logement (41) et amené à traverser le manchon (3) alors qu'il est solidement fixé audit matériau (61) d'empreinte.

6. Transfert dentaire, selon la revendication 1, dans lequel ledit manchon (3) présente au moins un renfoncement circonférentiel, ou une rainure (32) appropriée pour assurer une fixation solide dans le matériau (61) d'empreinte durci.

7. Transfert dentaire, selon la revendication 1, dans lequel ladite tête (11) élargie de ladite vis (1) de fixation présente une partie (12) moletée qui aide à la saisir.

8. Transfert dentaire, selon la revendication 1, dans lequel ladite tête (11) élargie de ladite vis (1) de fixation au niveau d'une partie d'extrémité est dotée d'un renfoncement conçu pour s'adapter sur un vérin prothétique courant d'une technique antérieure servant à serrer et desserrer ladite vis (1).
